# EUROPÄISCHE PATENTANMELDUNG

(11) **EP 4 064 548 A1**
(43) Veröffentlichungstag der Anmeldung: **28.09.2022**
(21) Anmeldenummer: 21164957.9
(22) Anmeldetag: 25.03.2021
(51) Int. Cl.: H02P 3/22, H02P 27/06, H02P 6/24

(54) **VERFAHREN ZUM ABBREMSEN EINES WERKZEUGS EINER ELEKTRO-WERKZEUGMASCHINE UND ELEKTRO-WERKZEUGMASCHINE**

(71) Anmelder: Hilti Aktiengesellschaft, 9494 Schaan (LI)
(72) Erfinder: Lacher, Michael, 86830 Schwabmünchen (DE)
(74) Vertreter: Hilti Aktiengesellschaft Corporate Intellectual Property

(57) **Zusammenfassung**

Die vorliegende Erfindung betrifft ein Verfahren zum Abbremsen eines Werkzeugs einer Elektro-Werkzeugmaschine, wobei ein Kurzschluss durch Öffnen einer Anzahl von Leistungsschaltern herbeigeführt und dafür verwendet wird, eine Bremswirkung auf das Werkzeug der Elektro-Werkzeugmaschine zu erzeugen. Bei dem Verfahren werden die Leistungsschalter für rückwärtsgerichtete elektrische Ströme während des Kurzschlusses der Leistungsschalter ganz oder teilweise ausgeschaltet. In einem weiteren Aspekt betrifft die Erfindung eine Elektro-Werkzeugmaschine mit einem Werkzeug, wobei ein Kurzschluss zum Abbremsen des Werkzeugs durch Öffnen einer Anzahl von Leistungsschaltern herbeigeführt wird, wobei die Leistungsschalter jeweils ein Schaltelement und eine Diode umfassen, wobei ein effektiver Widerstand der Dioden größer ist als ein effektiver Widerstand der Schaltelemente der Leistungsschalter, wobei die Leistungsschalter für rückwärtsgerichtete elektrische Ströme während des Kurzschluss der Leistungsschalter ganz oder teilweise ausschaltbar ist.

## Beschreibung

Die vorliegende Erfindung betrifft ein Verfahren zum Abbremsen eines Werkzeugs einer Elektro-Werkzeugmaschine, wobei ein Kurzschluss durch Öffnen einer Anzahl von Leistungsschaltern herbeigeführt und dafür verwendet wird, eine Bremswirkung auf das Werkzeug der Elektro-Werkzeugmaschine zu erzeugen. Bei dem Verfahren werden die Leistungsschalter für rückwärtsgerichtete elektrische Ströme während des Kurzschlusses der Leistungsschalter ganz oder teilweise ausgeschaltet. In einem weiteren Aspekt betrifft die Erfindung eine Elektro-Werkzeugmaschine mit einem Werkzeug, wobei ein Kurzschluss zum Abbremsen des Werkzeugs durch Öffnen einer Anzahl von Leistungsschaltern herbeigeführt wird, wobei die Leistungsschalter jeweils ein Schaltelement und eine Diode umfassen, wobei ein effektiver Widerstand der Dioden größer ist als ein effektiver Widerstand der Schaltelemente der Leistungsschalter, wobei die Leistungsschalter für rückwärtsgerichtete elektrische Ströme während des Kurzschluss der Leistungsschalter ganz oder teilweise ausschaltbar ist.

### Hintergrund der Erfindung:

Im Bereich der Elektro-Werkzeugmaschinen sind beispielsweise Schleifgeräte mit einer Schleifscheibe als rotierendem Werkzeug bekannt oder Krenbohrgeräte mit Bohrkronen als rotierende Werkzeuge. Nach dem Ausschalten eines Antriebs einer solchen Elektro-Werkzeugmaschine ist in der Drehbewegung des Werkzeugs, sowie grundsätzlich in den rotierenden Komponenten des Geräts, kinetische Energie gespeichert. Diese kinetische Energie hängt von der Masse und der Drehzahl der jeweiligen Komponente ab und sorgt für eine unerwünschte Weiterbewegung der rotierenden Komponenten der Elektro-Werkzeugmaschine. Eine Bremswirkung auf diese rotierenden Komponenten der Elektro-Werkzeugmaschine wird durch die mechanische Reibung der Komponenten in ihren Kontaktbereichen mit der Maschine bewirkt. Durch diese Bremswirkung verlangsamt sich die Drehbewegung der rotierenden Komponenten der Elektro-Werkzeugmaschine und es kommt schließlich zu einem Stillstand der Komponenten. Wenn die Drehzahl einer solchen rotierenden Komponente der Elektro-Werkzeugmaschine gegenüber der Zeit aufgetragen wird, ergibt sich eine sog. Auslaufkurve, die das Langsamer-Werden der rotierenden Komponenten der Elektro-Werkzeugmaschine darstellt.

Im Stand der Technik sind verschiedene Verfahren bekannt, um eine rotierende Komponente einer Elektro-Werkzeugmaschine abzubremsen. Beispielsweise wird das sogenannte Kurzschlussbremsen am Motor praktiziert, bei dem die Phasen des Elektromotors der Elektro-Werkzeugmaschine kurzgeschlossen werden. Der elektrische und magnetische Widerstand in dem entsprechenden Schalt- oder Wirkkreis wirkt in diesem Fall ähnlich wie die mechanische Reibung und führt zu einem Abbremsen des Werkzeugs. Nachteilig an dem sog. Kurzschlussbremsen ist allerdings, dass der Bremsvorgang nicht steuerbar ist. Dies führt dazu, dass weder die Bremszeit, noch das Nutzerempfinden beeinflusst werden können. Darüber hinaus wird durch das Kurzschließen der Motorphasen ein Bremsstrom erzeugt, der in irgendeiner Weise behandelt bzw. abgeführt werden muss.

Ferner ist im Stand der Technik das rückspeisende Bremsen bekannt. Dabei kann durch die Ansteuerung einer Motorbrücke mit einer bestimmten Ausgangsspannung die bei dem Bremsvorgang freiwerdende Bremsenergie in die Batterie der Elektro-Werkzeugmaschine zurückgespeist werden. In diesem Fall spricht man vom generatorischen Betrieb des Motors der Elektro-Werkzeugmaschine. Im generatorischen Betrieb der Elektro-Werkzeugmaschine ist der Bremsstrom und damit verbunden der Bremsvorgang steuerbar. Das bedeutet, dass im generatorischen Betrieb der Elektro-Werkzeugmaschine die Bremszeiten einstellbar sind bzw. dass der Bremsvorgang an unterschiedliche Anwendungsfälle oder äußere Gegebenheiten angepasst werden kann.

Im Zusammenhang mit dem Kurzschlussbremsen kann es zu folgenden Schwierigkeiten kommen:
Wenn der Bremsvorgang durch Schließen des Kurzschlussbremskreises gestartet ist, führt ein Öffnen des Kurzschlusskreises zwangsläufig zu einem Rückspeise-Vorgang. Der Strom, der zunächst in dem Kurzschlusskreis geflossen war, kann beispielsweise über den Batteriekreis abgebaut werden. Probleme können insbesondere dann auftreten, wenn in der Werkzeugmaschine bzw. in seiner Elektronik kein Batteriekreis vorhanden ist. In diesem Fall können unerwünschte Spannungsspitzen am Ausgang des Motors der Elektro-Werkzeugmaschine auftreten, die unter Umständen zu Schäden an dem Gerät oder seiner Komponenten führen. Ferner können die Spannungsspitzen am Kondensator-Zwischenkreis auftreten, wo sie ebenfalls Schaden anrichten können.

Wie bereits beschrieben, lässt sich die Bremswirkung beim Kurzschlussbremsen nicht verändern bzw. modifizieren. Die Höhe des Bremsstroms hängt von den Eigenschaften und/oder Betriebszuständen des Motors der Elektro-Werkzeugmaschine ab. Insbesondere hängt die Höhe des Bremsstroms beispielsweise von den Leitungs-Widerständen der Elektronik der Werkzeugmaschine, den allgemeinen Widerständen in der Elektronik der Werkzeugmaschine und/oder den Leistungshalbleitern ab, dabei insbesondere von dem verbleibenden Widerstand in einem eingeschalteten Zustand von z.B. Metall-Oxid-Halbleiter-Feldeffekttransistoren («MOS-FETs»). Diese Stellmöglichkeiten sind gemäß dem Stand der Technik *per se* nicht dazu geeignet, eine Einstellbarkeit bzw. Veränderbarkeit des Bremsvorgangs beim Kurzschlussbremsen einer Elektro-Werkzeugmaschine zu ermöglichen.

Die Aufgabe, die der vorliegenden Erfindung zugrunde liegt, besteht darin, die vorstehend beschriebenen Mängel und Nachteile des Standes der Technik zu überwinden und ein Bremsverfahren für Elektro-Werkzeugmaschinen anzugeben, mit dem die Einstellbarkeit bzw. Veränderbarkeit des Bremsvorgangs, das vom rückspeisenden Bremsen bekannt ist, auch für das Kurzschlussbremsen möglich zu machen. Mit anderen Worten soll ein auf dem Kurzschlussbremsen basierendes Bremsverfahren für eine Elektro-Werkzeugmaschine angegeben werden, bei dem der Bremsvorgang derart angepasst werden kann, indem beispielsweise die Bremszeiten oder eine Bremsstrom verändert werden können.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein Verfahren zum Abbremsen eines Werkzeugs einer Elektro-Werkzeugmaschine vorgesehen, wobei ein Kurzschluss durch Öffnen einer Anzahl von Leistungsschaltern herbeigeführt und dafür verwendet wird, eine Bremswirkung auf das Werkzeug der Elektro-Werkzeugmaschine zu erzeugen. Das Bremsverfahren ist dadurch gekennzeichnet, dass die Leistungsschalter für rückwärtsgerichtete elektrische Ströme während des Kurzschlusses der Leistungsschalter ganz oder teilweise ausgeschaltet werden. Das Ausschalten der Leistungsschalter erfolgt vorzugsweise dadurch, dass die Leistungsschalter für rückwärtsgerichtete elektrische Ströme während des Kurzschlusses der Leistungsschalter geöffnet werden.

Ein wesentlicher Vorteil der Erfindung besteht darin, dass der an sich bekannte Kurzschlussbremsvorgang bei einer Elektro-Werkzeugmaschine ohne weitere Komponenten oder Bauteile in der Geräte-Elektronik beeinflusst werden kann. Dieser Vorteil kann insbesondere dazu verwendet werden, kürzere oder längere Bremszeiten einzustellen, wobei diese Einstellung von veränderbaren Bremszeiten vorteilhafterweise ohne ein Rückspeisen der freiwerdenden Bremsenergie erfolgt. Dadurch können insbesondere unerwünschte Spannungsspitzen am Ausgang des Motors der Elektro-Werkzeugmaschine bzw. am Kondensatorkreis, sowie Schäden an der Elektro-Werkzeugmaschine wirksam verhindert werden, insbesondere dann, wenn kein Batteriekreis in der Elektro-Werkzeugmaschine vorgesehen ist. Der Begriff "Batteriekreis" bezeichnet im Kontext der vorliegenden Erfindung bevorzugt einen Stromkreis, der den Motor der Elektro-Werkzeugmaschine, einen Motorinverter, einen Zwischenkreis und die Batterie der Elektro-Werkzeugmaschine umfasst. Bei dem Verfahren kann ein Kurzschluss durch einzelnes oder gleichzeitiges Öffnen einer Anzahl von Low-Side-Schaltern oder durch Öffnen einer Anzahl von High-Side-Schaltern verwendet wird, um eine Bremswirkung auf das Werkzeug der Elektro-Werkzeugmaschine zu erzeugen. Dieses an sich bekannte Kurzschlussbremsen kann dann dadurch modifiziert bzw. erweitert werden, dass die Leistungsschalter (Low-Side- und High Side-Schalter) für rückwärtsgerichtete elektrische Ströme während des Kurzschlusses der Leistungsschalter ganz oder teilweise ausgeschaltet werden.

Mit der Erfindung kann insbesondere ein optimiertes Verfahren zum Kurzschlussbremsen für Elektro-Werkzeugmaschinen bereitgestellt werden, bei dem Dioden verwendet werden, die vorzugsweise parallel zu Leistungshalbleitern innerhalb der Elektronik der Elektro-Werkzeugmaschine geschaltet sind.

Die Erfindung betrifft insbesondere ein Verfahren zum Abbremsen eines Werkzeugs einer Elektro-Werkzeugmaschine, das durch die folgenden Verfahrensschritte gekennzeichnet ist:
a) Betrieb einer Elektro-Werkzeugmaschine mit einem Werkzeug,
b) Erzeugen eines Kurzschlusses durch Schließen einer Anzahl von Leistungsschaltern, um eine Bremswirkung auf das Werkzeug der Elektro-Werkzeugmaschine zu bewirken,
c) Ausschalten der Leistungsschalter für rückwärtsgerichtete elektrische Ströme während des Kurzschlusses der Leistungsschalter.

Es ist im Sinne der Erfindung bevorzugt, dass das Ausschalten der Leistungsschalter ganz oder teilweise erfolgt. Das bedeutet im Sinne der Erfindung bevorzugt, dass die Leistungsschalter vollständig ausgeschaltet werden können. Alternativ können sie mit Hilfe eines Puls Width Modulation-Betriebs (PWM) auf einen Wert zwischen 0 oder 100 % geregelt werden. Es ist im Sinne der Erfindung ganz besonders bevorzugt, dass der wirkende Widerstand verändert werden kann auf werte zwischen 0 % und 100 %, wobei kleine Prozentwerte einem kleinen Widerstand entsprechen und große Prozentwerte einem großen Widerstand. Der maximale Widerstand wird bei 100 % erreicht, wobei solche hohen Widerstandswerte insbesondere bei Verwendung einer Diode erreicht werden. Als Regelgröße kann vorzugsweise der Strom oder eine Drehzahl des Motors der Elektro-Werkzeugmaschine verwendet werden.

Es ist im Sinne der Erfindung bevorzugt, dass die Leistungsschalter während einer Phase des Rückwärtsstroms, beispielsweise während des Kurzschluss-Bremsens des Elektro-Werkzeugs, komplett ausgeschaltet werden. Es kann im Sinne der Erfindung auch bevorzugt sein, dass die Leistungsschalter auf Werte zwischen im Wesentlichen 0 bis 100 % des ursprünglichen Werts geregelt werden können. Diese Regelung kann insbesondere durch einen Puls Width Modulation-Betrieb (PWM) erfolgen. Das Ausschalten der Leistungsschalter erfolgt vorzugsweise dadurch, dass die Leistungsschalter geöffnet werden.

Im Kontext der vorliegenden Erfindung werden insbesondere solche Werkzeugmaschinen betrachtet, deren Energieversorgung mit mindestens einer Batterie und/oder mindestens einem Akkumulator («Akku») erfolgt. Diese Werkzeugmaschinen werden im Sinne der Erfindung als «Elektro-Werkzeugmaschinen» bezeichnet. Vorzugsweise kann das vorgeschlagene Verfahren auch für Werkzeugmaschinen eingesetzt werden, die mit Netzspannung betrieben werden können. Das Verfahren kann insbesondere für solche Elektro-Werkzeugmaschinen eingesetzt werden, die einen bürstenlosen Gleichspannungsmotor aufweisen. Bei den Elektro-Werkzeugen kann es sich beispielsweise um ein Schleifgerät oder ein Kernbohrgerät mit rotierenden Werkzeugen handeln. Das vorgeschlagene Verfahren kann aber auch bei Geräten mit schlagenden Werkzeugen, wie Bohrhämmern, eingesetzt werden.

Es ist im Sinne der Erfindung bevorzugt, dass beim vorgeschlagenen Bremsverfahren die Leistungsschalter für rückwärtsgerichtete Ströme gezielt ausgeschaltet werden, um ein Rückspeisen der freiwerdenden Bremsenergie zu verhindern. Dies kann insbesondere dadurch erreicht werden, dass die Leistungsschalter jeweils ein Schaltelement und eine Diode umfassen, wobei ein effektiver Widerstand der Dioden größer ist als ein effektiver Widerstand der Schaltelemente der Leistungsschalter. Im Kontext der vorliegenden Erfindung wurde insbesondere erkannt, dass ein Zusammenhang zwischen einer Widerstandsänderung und einer Änderung des Bremsverhaltens besteht. Insbesondere wird mit dem bevorzugt gezielten Ausschalten der Leistungsschalter für rückwärtsgerichtete Ströme eine Erhöhung des elektrischen Widerstands erreicht, die das Bremsverhalten des Werkzeugs der Elektro-Werkzeugmaschine beeinflussen kann.

Der Zusammenhang zwischen Widerstandserhöhung und Bremsverhalten der Elektro-Werkzeugmaschine kann vorteilhafterweise dazu verwendet werden, um unerwünschte und möglicherweise schädliche Spannungsspitzen am Motorausgang und/oder am Kondensator-Zwischenkreis wirksam zu vermeiden. Darüber hinaus kann mit der Erfindung erreicht werden, dass die Bremswirkung während des Kurzschlussbremsens verändert werden kann. Insbesondere kann der Bremsvorgang in dem Sinne gesteuert werden, dass er an unterschiedliche Gegebenheiten, Anwendungsfälle oder Kundenwünsche angepasst werden kann. Dies war im Stand der Technik bisher nicht möglich. Die Erfindung stellt somit insbesondere eine Ergänzung des bekannten Kurzschluss-Bremsens bei Elektro-Werkzeugmaschinen dar, bei der die Bremswirkung verändert bzw. eingestellt werden kann. Es ist im Sinne der Erfindung bevorzugt, dass eine Reduzierung der Bremszeit durch eine Erhöhung der Bremsleistung erreicht werden kann. Ein solche Erhöhung der Bremsleistung kann vorteilhafterweise mit Hilfe einer Erhöhung des Widerstands erreicht werden, da sich der Motor der Elektro-Werkzeugmaschine insbesondere bei hohen Kurzschlussbremsströmen wie eine Stromquelle verhalten kann. In einzelnen Fällen kann sich der Motor der Elektro-Werkzeugmaschine auch wie eine Spannungsquelle verhalten. In diesen Fällen reduziert eine Widerstandserhöhung die Bremsleistung. Diese inversen Zusammenhänge werden im Kontext der vorliegenden Erfindung genutzt, um beispielsweise eine Bremszeit des Werkszeugs der Elektro-Werkzeugmaschine regeln bzw. einstellen zu können.

In einem zweiten Aspekt betrifft die Erfindung eine Elektro-Werkzeugmaschine zur Durchführung eines der vorgeschlagenen Bremsverfahren. Die für das Bremsverfahren eingeführten Begriffe, Definitionen und technischen Vorteile gelten vorzugsweise für die Elektro-Werkzeugmaschine analog. Die Erfindung betrifft insbesondere eine Elektro-Werkzeugmaschine mit einem Werkzeug, wobei ein Kurzschluss zum Abbremsen des Werkzeugs durch Öffnen einer Anzahl von Leistungsschaltern herbeigeführt wird, wobei die Leistungsschalter jeweils ein Schaltelement und eine Diode umfassen, wobei ein effektiver Widerstand der Dioden größer ist als ein effektiver Widerstand der Schaltelemente der Leistungsschalter, wobei die Leistungsschalter für rückwärtsgerichtete elektrische Ströme während des Kurzschluss der Leistungsschalter ganz oder teilweise ausschaltbar ist.

Vorzugsweise können die Leistungsschalter von Low Side-Schaltern und von High Side-Schaltern gebildet werden. Es ist im Sinne der Erfindung bevorzugt, dass die Leistungsschalter eine Diode in Rückwärtsrichtung umfassen. Diese Diode kann bei Metall-Oxid-Halbleiter-Feldeffekttransistoren («MOS-FETs») beispielsweise parasitär und/oder als Bodydiode ausgebildet sein. Bei Bipolartransistoren mit isolierter Gate-Elektrode (IGBT) kann die bevorzugt rückwärtsgerichtete Diode vorzugsweise in einem Gehäuse zusätzlich integriert vorliegen. Wenn ein Leistungsschalter von sich aus keine bevorzugt rückwärtsgerichtete Diode aufweist, kann eine solche Diode ohne funktionale Nachteile in eine Motorbrücke des Leistungsschalters integriert werden. Es ist im Sinne der Erfindung bevorzugt, dass die Elektro-Werkzeugmaschine eine Schalteranordnung zur Leistungsansteuerung des Motors umfasst, wobei die Schalteranordnung einen Motorinverter umfasst. Es ist im Sinne der Erfindung bevorzugt, dass der Motorinverter als B6-Brücke oder als Schaltelement zum Ansteuern des Motors ausgebildet ist. Es ist im Sinne der Erfindung bevorzugt, dass die Leistungsschalter Bestandteil des Motorinverters und/oder Bestandteil der Schalteranordnung zur Leistungsansteuerung des Motors sind. Vorzugsweise können die Leistungsschalter von Leistungs-Halbleitern gebildet werden. Die Low Side-Schalter werden im Sinne der Erfindung bevorzugt auch als minus- oder masseseitige Schalter bezeichnet und sie sind vorzugsweise Bestandteile des Motorinverters der Elektro-Werkzeugmaschine. Es ist im Sinne der Erfindung bevorzugt, dass es sich bei den High-Side-Schaltem des Motorinverters um plusseitige Schalter der Schalteranordnung handelt.

Es ist im Sinne der Erfindung bevorzugt, dass der Kurzschluss zur Erzeugung der Bremswirkung auf das Werkzeug der Elektro-Werkzeugmaschine entweder über einen Low Side-Schalter-Kreis oder über einen High Side-Schalter-Kreis geschlossen wird. Dazu können die entsprechenden Leistungsschalter eingeschaltet und vorzugsweise erst nach einem Stillstand des Motors der Elektro-Werkzeugmaschine wieder geöffnet werden.

In einer weiteren Ausgestaltung der Erfindung kann auch ein Wechsel zwischen den Low Side-Schaltern und den High Side-Schaltern erfolgen. Das bedeutet im Sinne der Erfindung bevorzugt, dass die Leistungsschalter alternierend geschaltet werden, also beispielsweise Low Side-Schalter und High Side-Schalter im Wechsel.

Es ist im Sinne der Erfindung bevorzugt, dass die Widerstandserhöhung, die durch das vorzugsweise gezielte Ausschalten der Leistungsschalter in Rückwärtsrichtung bewirkt wird, je nach Betriebszustand des Motors unterschiedliche Wirkungen auf die Bremsleistung haben kann. Es ist im Sinne der Erfindung bevorzugt, dass sich eine Widerstandserhöhung steigernd auf die Bremsleistung auswirken kann, wenn sich der Motor der Elektro-Werkzeugmaschine in einem Bereich der Stromsättigung befindet. Wenn sich der Motor der Elektro-Werkzeugmaschine in einem Spannungsbereich befindet, kann es im Sinne der Erfindung bevorzugt sein, dass sich eine Widerstandserhöhung dämpfend auf die Bremsleistung auswirkt. Im ersten Fall kann die Bremsleistung mit Hilfe des Zusammenhangs P = I². R bestimmt werden, im zweiten Fall durch die Relation P = U² / R.

Es ist im Sinne der Erfindung bevorzugt, dass eine elektro-motorische Kraft (EMK) proportional zur Drehzahl des Motors der Elektro-Werkzeugmaschine ist. Das bedeutet im Sinne der Erfindung bevorzugt, dass die EMK in Bezug auf die Drehzahl bzw. Geschwindigkeit des Motors der Werkzeugmaschine linear verläuft bzw. ihr Verlauf in Abhängigkeit von der Drehzahl n als Gerade dargestellt werden kann. Durch diese Proportionalität liegen während eines Bremsvorgangs der Elektro-Werkzeugmaschine zumeist beide Betriebszustände des Motors der Elektro-Werkzeugmaschine vor, d.h. sowohl der Bereich der Stromsättigung des Motors der Werkzeugmaschine, als auch der Spannungsbereich des Motors. Es ist im Sinne der Erfindung bevorzugt, dass mit der Erfindung eine gezielte Steuerung des Bremsvorgangs ermöglicht wird, um eine vorteilhafte Wirkung auf den Gesamtbremsvorgang der Werkzeugmaschine zu erreichen. Diese gezielte Steuerung erfolgt vorzugsweise basierend auf den genannten Eigenschaften und/oder Betriebszuständen des Motors der Elektro-Werkzeugmaschine. Diese gezielte Steuerung kann insbesondere mit Hilfe von Look-Up-Tabellen, PID-Reglern oder speziellen Steuerungsfunktionen erreicht werden.

Es ist im Sinne der Erfindung bevorzugt, dass im Kontext der vorliegenden Erfindung die Motorströme in Betrag und/oder Richtung und/oder die Drehzahl des Motors der Elektro-Werkzeugmaschine als Regel-Eingangsgröße verwendet werden kann. Als Regel-Ausgangsgröße können vorzugsweise Steuersignale an die Leistungsschalter verwendet werden. Es ist im Sinne der Erfindung ganz besonders bevorzugt, dass als Regel-Ausgangsgröße die Steuersignale an die Low Side- und/oder die High Side-Leistungsschalter bzw. Leistungshalbleiter erhalten werden.

Ein wesentlicher Vorteil der Erfindung besteht darin, dass das vorgeschlagene Bremsverfahren auf den Low Side-Kurzschlusskreis oder den High Side-Kurzschlusskreis und/oder sequentiell abwechselnd in beiden Kurzschlusskreisen eingesetzt werden kann. Mit der Erfindung wird insbesondere die Aufgabe gelöst, ohne Einsatz weiterer Bauteile oder Bauelemente den in einem Kurzschlusskreis wirkenden Widerstand zu verändern bzw. veränderbar zu machen. Durch eine gezielte Steuerung bzw. Auslegung des Motors der Elektro-Werkzeugmaschine kann der Kurzschlussbremsvorgang mit Hilfe der Erfindung gesteuert werden, was beim bisher im Stand der Technik bekannten Kurzschlussbremsen nicht der Fall war, insbesondere dann nicht, wenn keine bei dem Bremsvorgang freiwerdende Energie ("Bremsenergie") in die Batterie der Elektro-Werkzeugmaschine zurückgespeist werden soll. Die Begriffe "Kurzschlusskreis" oder "Kurzschlussbremskreis" bezeichnet im Kontext der vorliegenden Erfindung bevorzugt einen Stromkreis, der den Motor der Elektro-Werkzeugmaschine und den Motorinverter umfasst.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: Schaltbild des Motorinverters mit Leistungsschaltern
- Fig. 2: Low Side-Kurzschlusskreis
- Fig. 3: High Side-Kurzschlusskreis
- Fig. 4: Bremsstromkreis mit Batterie und Zwischenkreiskondensator
- Fig. 5: schematisches Blockschaltbild für Regel-/Steuerkreis
- Fig. 6: schematische Auftragung des Bremsstroms durch die Leistungshalbleiter

### Ausführungsbeispiele und Figurenbeschreibung: Komplett neu geschrieben

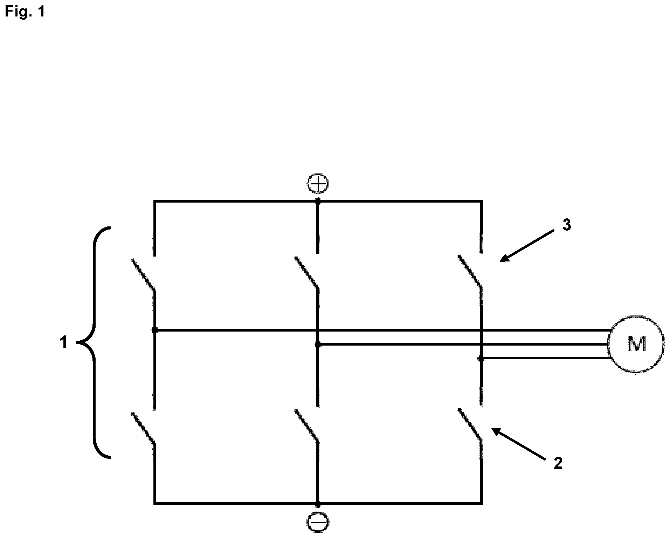

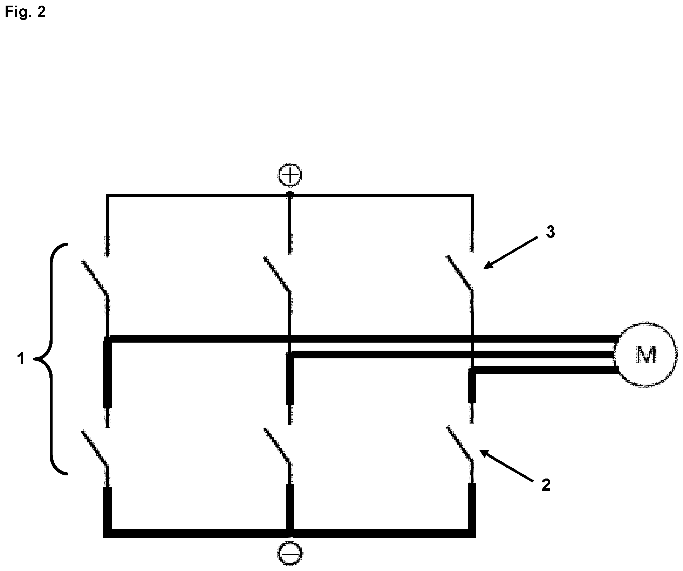

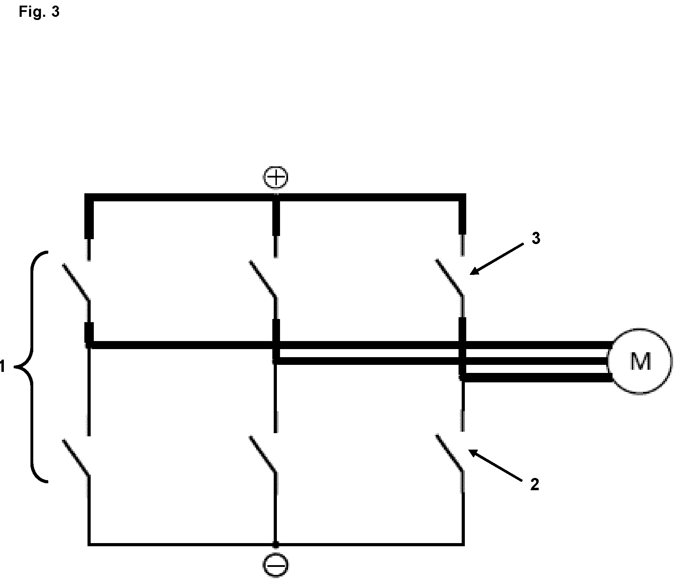

Figur 1 zeigt ein Schaltbild eines Motorinverters mit Leistungsschaltern 1. Die Leistungsschalter 1 können insbesondere als Low Side-Schalter 2 oder als High Side-Schalter 3 ausgebildet sein. Mit anderen Worten können die Low Side-Schalter 2 eine Teilmenge der Leistungsschalter 1 bilden, wobei die Low Side-Schalter 2 vorzugsweise den Low Side-Kurzschlusskreis bilden, der in Fig. 2 dargestellt ist. Die High Side-Schalter 3 bilden vorzugsweise eine andere Teilmenge der Leistungsschalter 1, wobei die High Side-Schalter 3 den High Side-Kurzschlusskreis bilden können, der in Fig. 3 dargestellt ist. Darüber hinaus ist in den Figuren jeweils auch der Motor M der Elektro-Werkzeugmaschine abgebildet.

Der in Fig. 1 dargestellte Motorinverters stellt vorzugsweise ein Schaltelement zum Ansteuern des Motors M der Elektro-Werkzeugmaschine dar. Es ist im Sinne der Erfindung bevorzugt, dass die Leistungsschalter 1 Bestandteil des Motorinverters des Motors M sind.

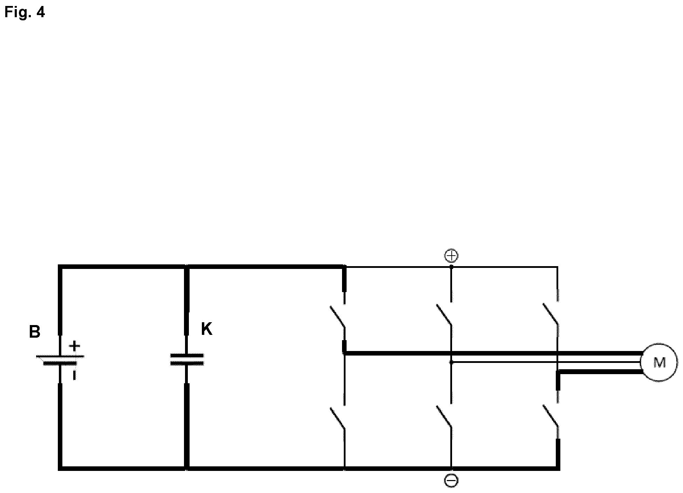

Fig. 4 zeigt einen Bremsstromkreis mit Batterie B und Zwischenkreiskondensator K. Insbesondere zeigt Fig. 4 einen Bremsstromkreis, bei dem ein Bremsstrom der Elektro-Werkzeugmaschine mit Hilfe der Batterie B und/oder des Zwischenkreiskondensators K rückgespeist werden kann. Eine mögliche Ausgestaltung des Motorinverters ist auf der rechten Hälfte von Fig. 4 abgebildet.

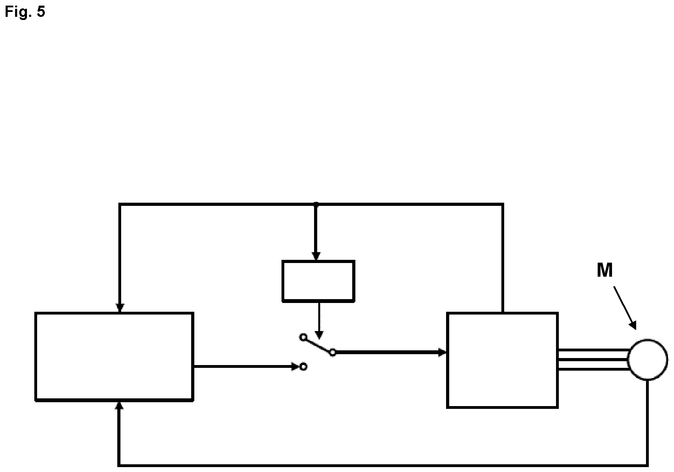

Fig. 5 zeigt ein schematisches Blockschaltbild für Regel-/Steuerkreis innerhalb der Elektro-Werkzeugmaschine. Insbesondere wird in Fig. 5 ein Regel-/Steuerkreis für einen Bremsstrom dargestellt. In dem Kasten links neben dem Motor M der Elektro-Werkzeugmaschine ist der Motorinverter mit den Leistungsschaltern 1 dargestellt. Der Motor M kann vorzugsweise mit einer Drehzahl n betrieben werden. Mit dem mittleren Kasten in Fig. 5 wird bevorzugt eine Vorzeichenprüfung dargestellt. Vorzugsweise wird geprüft, welches Vorzeichen der eingehende Strom bzw. Bremsstrom hat. Eine Leitung des Stroms durch die Dioden der Leistungshalbleiter 1 (PWM-Betrieb) erfolgt bevorzugt nur dann, wenn ein negativer, d.h. rückwärtsgerichteter Bremsstrom detektiert wird. Der Begriff «rückwärtsgerichteter Strom» wird im Sinne der Erfindung bevorzugt für negative Ströme verwendet. Der unterhalb dieses Kastens angeordnete Schalter ist vorzugsweise im Wesentlichen dauerhaft geschlossen, wie es dem bekannten Kurzschlussbremsen bei Elektro-Werkzeugmaschinen entspricht. Über diesen Schalter kann vorzugsweise das Steuerungssignal für eine Nutzung der Dioden der Leistungsschalter 1 transportiert werden. Der Kasten links im Bild kann die Funktionalität der gezielten Steuerung des Bremsvorgangs bereitstellen. Dort kann im Sinne der Erfindung ein PWM-Modul angeordnet vorliegen. Die gezielte Steuerung des Bremsvorgangs der Elektro-Werkzeugmaschine kann auch unter Verwendung von Look-Up-Tabellen, PID-Reglern oder speziellen Steuerungsfunktionen ermöglicht werden. Insbesondere kann auf diese Weise ein Eingabe-Ausgabe Signal berechnet werden.

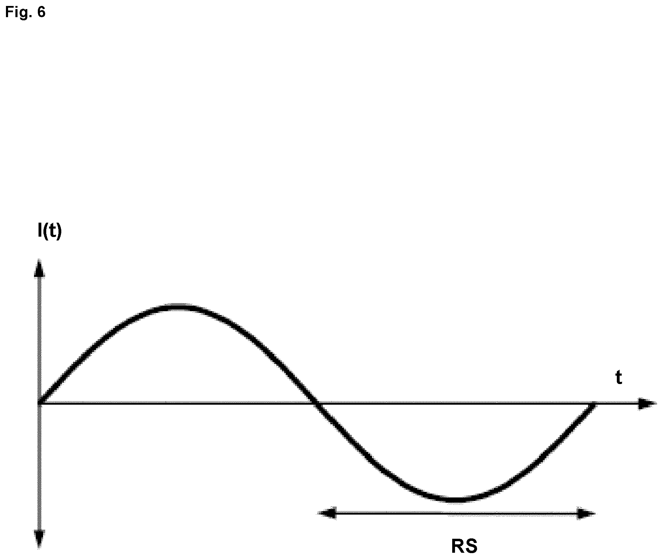

Fig. 6 zeigt eine schematische Auftragung des Bremsstroms I(t) durch die Leistungshalbleiter 1. Auf der y-Achse des in Fig. 6 dargestellten Koordinatensystems ist der Bremsstrom I(t) aufgetragen, während auf der x-Achse die Zeit t aufgetragen ist. Eine ähnliche Auftragung könnte bevorzugt auch für den Bremsstrom in Abhängigkeit von einem Drehwinkel des Motors der Elektro-Werkzeugmaschine erstellt werden. In Fig. 6 stellen die Stromwerte oberhalb der x-Achse einen positiven Bremsstrom dar, während die Stromwerte unterhalb der x-Achse einen negativen Bremsstrom darstellen. In der rechten Bildhälfte ist der rückwärtsgerichtete Bremsstrom RS dargestellt, der im Sinne der Erfindung bevorzugt auch als «rückwärtsgerichteter elektrischer Strom" bezeichnet wird. Der rückwärtsgerichtete Bremsstrom RS entspricht vorzugsweise dem Abschnitt auf der Zeitachse, für den der Bremsstrom I(t) negativ ist.

### Bezugszeichenliste

- 1: Leistungsschalter
- 2: Low Side-Schalter
- 3: High Side-Schalter
- M: Motor
- B: Batterie
- K: Zwischenkreiskondensator
- RS: rückwärtsgerichteter Bremsstrom

## Patentansprüche

1. Verfahren zum Abbremsen eines Werkzeugs einer Elektro-Werkzeugmaschine, wobei ein Kurzschluss durch Schließen einer Anzahl von Leistungsschaltern (1) herbeigeführt und dafür verwendet wird, eine Bremswirkung auf das Werkzeug der Elektro-Werkzeugmaschine zu erzeugen,
**dadurch gekennzeichnet, dass**
die Leistungsschalter (1) für rückwärtsgerichtete elektrische Ströme (RS) während des Kurzschlusses der Leistungsschalter (1) ganz oder teilweise ausgeschaltet werden.

2. Verfahren zum Abbremsen eines Werkzeugs einer Elektro-Werkzeugmaschine, wobei ein Kurzschluss durch Öffnen einer Anzahl von Leistungsschaltern (1) herbeigeführt und dafür verwendet wird, eine Bremswirkung auf das Werkzeug der Elektro-Werkzeugmaschine zu erzeugen,
**gekennzeichnet durch die folgenden Verfahrensschritte:**
a) Betrieb einer Elektro-Werkzeugmaschine mit einem Werkzeug,
b) Erzeugen eines Kurzschlusses durch Schließen einer Anzahl von Leistungsschaltern (1), um eine Bremswirkung auf das Werkzeug der Elektro-Werkzeugmaschine zu bewirken,
c) Ausschalten der Leistungsschalter (1) für rückwärtsgerichtete elektrische Ströme (RS) während des Kurzschlusses der Leistungsschalter (1).

3. Elektro-Werkzeugmaschine mit einem Werkzeug, wobei ein Kurzschluss zum Abbremsen des Werkzeugs durch Schließen einer Anzahl von Leistungsschaltern (1) herbeigeführt wird,
**dadurch gekennzeichnet, dass**
die Leistungsschalter (1) jeweils ein Schaltelement und eine Diode umfassen, wobei ein effektiver Widerstand der Dioden größer ist als ein effektiver Widerstand der Schaltelemente der Leistungsschalter, wobei die Leistungsschalter (1) für rückwärtsgerichtete elektrische Ströme (RS) während des Kurzschluss der Leistungsschalter (1) ganz oder teilweise ausschaltbar ist.

4. Elektro-Werkzeugmaschine nach Anspruch 3
**dadurch gekennzeichnet, dass**
die Leistungsschalter (1) von Low Side-Schaltern (2) und von High Side-Schaltern (3) gebildet werden.
